# EUROPEAN PATENT APPLICATION

(11) **EP 4 835 343 A1**
(43) Date of publication of application: **04.11.2026**
(21) Application number: 26157536.9
(22) Date of filing: 10.02.2026
(51) Int. Cl.: F16L 59/16

(54) **INSULATING METHOD, INSULATING DEVICE AND ASSEMBLY**

(30) Priority: 10.02.2025 NL 2039753
(71) Applicant: Wavin B.V., 1118 BK Schiphol (NL)
(72) Inventor: DUEHOLM, Søren, 1118 BK Schiphol (NL); BREUKELMAN, Ronald, 1118 BK Schiphol (NL); SMITS, Jan Willem Theodor José, 1118 BK Schiphol (NL)
(74) Representative: van Bouwelen, Franciscus Maria

(57) **Abstract**

A method for insulating a piping component, such as a manifold, of an indoor climate control system, which includes:

• providing a modular body (10) of which an inner profile is configured to match at least a part of the piping component's outer profile, the modular body having at least a first (12) and second (14) member;
• mounting the first member (12) to a fixture (40) having a proximal end and a distal end, wherein the first member is transversely penetrated by the distal end of the fixture, and wherein the fixture at the proximal end is securable to a support structure;
• fitting the piping component (30) onto the first member (12); and
• arranging the second member (14) onto an exposed surface of the piping component (30).

## Description

### Field of the disclosure

This disclosure relates to insulating strategies. In particular, the present disclosure relates to a method for insulating and an insulating device and assembly, in particular an insulating sleeve and method for a piping component, such as a manifold, typically used for an indoor climate control system.

### Background of the disclosure

An indoor climate control system through which fluids are conveyed to regulate the temperature within an establishment, for example a house, office or the like, for which the system is installed, typically involves having at least one manifold through which a number of the system's piping components are connected.

These manifolds are typically installed and/or located indoor, preferably in a manner (e.g., hidden), but more importantly, to be installed in a space-efficient manner. The term "space-efficient" in terms of this application refers to a manifold being installed onto a support structure (e.g., wall, roof or floor) in such close proximity to the support structure to avoid embarking on the living space of the users of the establishment.

However, since these manifolds also need to be insulated, the fact that the installation needs to be as space efficient as possible, by itself presents certain disadvantages/problems during the insulation thereof.

It is commonly known that a typical method of insulating these manifolds would be to insulate the manifolds after installation. Meaning, once the manifold has been secured to a wall (for example), only thereafter is the relevant insulation applied to the manifold. This approach often results in the manifold not being properly insulated and accordingly, negatively effects the energy efficiency and thermal performance of the indoor climate control system.

Therefore, there is a need for a method and apparatus to improve the process of insulating a manifold, such to ensure improved energy efficiency in such systems, in a space-efficient manner.

### Summary of the disclosure

In a first aspect of the present disclosure there is provided a method for insulating a piping component, such as a manifold, of an indoor climate control system, which includes
providing a modular body of which an inner profile is configured to match at least a part of the piping component's outer profile, the modular body having at least a first and second member;
mounting the first member to a fixture having a proximal end and a distal end, wherein the first member is transversely penetrated by the distal end of the fixture, and wherein the fixture at the proximal end is securable to a support structure;
fitting the piping component onto the first member; and
arranging the second member onto an exposed surface of the piping component.

The method allows for insulating at least a part of the piping component that is enclosed within the modular body.

Advantageously, this allows for having plenty of space available for mounting the first member onto the fixture, as the fixture is at the time of such mounting of the first member not necessarily secured to the support structure. This also allows ultimately for an accurate positioning of the first member and a space- efficient positioning of the insulation as the space between the support structure and the piping component can be small. Another advantage is that the insulation may be placed so accurately on to the piping component that the heat-efficiency is optimal. For the sake of completeness is pointed out that when the piping component is used for cooling an indoor climate, it is with thermally efficiently insulating also possible to avoid condensation of moisture onto a manifold through which relatively cool water flows.

Optionally, the fixture is secured to a support structure after mounting the first member to the fixture. It is also possible to secure the fixture to the support structure after fitting the piping component onto the first member.

The step of fitting the piping component may include at least one of the following steps:
attaching the piping component to the fixture by means of an interference or compression fit as a result of the piping component engaging with the distal end of the fixture extending through the first member; and, optionally
securing the piping component to the distal end by means of a fastening device.

Such a method advantageously allows for the possibility to end up with a thermal efficiency that needs high standards, for instance the one as in place in Denmark.

This allows for placement very close to the support structure, as no allowance needs to be made for placing and or manipulating insulation material between the manifold and the support structure.

Advantageously, this also provides for a straightforward way of attaching the piping component to the fixture, that may be fool-proof and secure.

The modular body may include gender connectors to allow for an interlocking arrangement between the members, and wherein the step of arranging the second member comprises using the gender connectors for interlocking the members.

The modular body may include fasteners to allow for the members to be detachable connected, and wherein the step of arranging the second member onto the exposed surface of the piping component may comprise detachably connecting the members using the fasteners.

In either or both embodiments in which the modular body includes the interlocking arrangement and/or fasteners, it advantageously provides for the piping component being encapsulated in an airtight and/or hermetically concealed manner within the members. A result may be in that during use of the piping component it provides for at least one of the following: a reduction in heat loss of the piping component, thereby increasing the indoor climate control system's energy efficiency and avoiding condensation on to the piping component when the piping component is part of the system that provides cooling.

Either or both the first member and second member may include a plurality of scored sections and/or perforations, such to provide for at least one of the following:
reducing an amount of push force required for the distal end to penetrate through and/or push-through the first member;
indexing positions through which the distal ends are to penetrate through and/or be pushed-through the first member, during the step of mounting the first member to the fixture; and
reducing the modular body's structural integrity, such to provide for a length adjustment means of the members, wherein the members may be broken or snapped at the scored sections.

The first member may include at least one aperture configured for receiving the distal end of the fixture therethrough, and wherein mounting the first member onto a fixture may comprise having the aperture receiving the distal end of the fixture.

The fixture may be in the form of a bracket or the like.

The distal end includes at least two legs, configured to match the configuration of the plurality perforations and/or at least two apertures arranged on the first member.

The bracket may include an insulating plate disposed onto the two legs and arranged between the proximal end and distal end of the bracket. The insulating plate may be configured such that when the first member is mounted to the fixture it advantageously provides for at least one the following:
insulating the penetratable section as penetrated by the distal end; and, optionally
restricting the first member from moving further in a direction towards the proximal end of the bracket.

The bracket may comprise of a material that relatively poorly conducts heat, if at all. Advantageously, when the piping component is attached to the fixture, heat made available by the piping component is only poorly conducted from within the encapsulated piping component outwards, if at all.

The modular body may further comprise of a material having at least one of the following characteristics: elastic, insulator, compressible, acoustic insulation, heat-resistant, impermeable, or the like.

The modular body may comprise of any one or a combination of the following materials: expanded polypropylene, expanded polystyrene, polyethylene propylene, foam plastics, foam polymers, or the like. The modular body can be made by well-known production techniques, such as for instance moulding.

Preferably that each member has a minimum cross-sectional width in a range of 12 mm to 18 mm. This strikes an acceptable balance between thickness of the body and the space it occupies and the heat conductivity through the member. The minimum cross sectional width may be 15 mm for meeting in line with for instance the Danish Standard DS452.

The support structure may include any of the following: a wall, a roof, a floor or the like.

The fastening device includes a clip operable of being detachably connected to the distal ends of the fixture, wherein the method includes detachably connecting the distal ends of the fixture by operating the clip.

The manifold may comprise or consist of any one of the following materials: a polymer, steel, stainless steel, brass or the like, or any combination thereof resulting in a composite material.

Optionally, the first member includes a plurality of cavities on an inner surface thereof, wherein the cavities are adjacent and/or indexed to the plurality of predetermined penetratable sections, wherein the plurality of cavities defines recesses and/or pockets within the first member, wherein the method comprises retaining displaced material or debris of the first member in the recesses and/or pockets, resulting from the penetration of the first member.

This not only to ensure that no debris is left behind on the floor or needs to be collected after completing of the method, but also ensures that the thermal insulation as provided by the sleeve is not significantly compromised by the penetration of the first member by the distal end of the fixture.

Preferably, the first member being transversely penetrated by the distal end of the fixture comprised piercing with the distal end of the fixture through the first member. This may allow for a snugly fitting of the distal end in the pierced-through opening in the first member, so that the piercing does not significantly compromise the insulating properties of the first member.

In a further aspect of the present disclosure there is provided an insulating sleeve for a piping component, such as a manifold, of a climate control system, which includes
a modular body having at least two members configured such that when the members are interlocked it defines the insulating sleeve, wherein an inner profile of the insulating sleeve matched at least a part of an outer profile of the piping component;
a plurality of open-ended or closed ended predetermined penetratable sections arranged on the first member, such to facilitate an insulated punch-out or push-through means when the first member is penetrated by an elongated object; and optionally,
a plurality of scored sections arranged on both members, thereby allowing for the insulating sleeve being adjustable in length to match the outer profile of the piping component.

Advantageously, as the insulating sleeve is provided with open-ended or close-ended predetermined penetratable sections to facilitate an insulated punch-out or push-through of an elongated object, it is possible to mount the first member on a fixture that allows for such a punch-out or push-through therewith allowing for maintaining thermal efficiency of the first member.

The insulating sleeve may include gender connectors arranged on the member, such to allow for the members to be interlocked.

The gender connectors may include cutouts and/or protrusions arranged in the members in an indexed manner.

The insulating sleeve may include fasteners to allow for the members to be detachable connected.

The first member may include apertures arranged configured for receiving the elongated object therethrough and preferably, after interlocking the member so as to define a sleeve, extending towards the second member.

Advantageously, the apertures facilitate the correct positioning of the elongated member.

The plurality of perforated sections may be in the form of at least one of the following: cuts, holes, apertures or the like. Advantageously and in use, the plurality of predetermined penetretable sections reduces an amount of push force required for the elongated object to penetrate the first member. Further, the section may provide guidance to the object, i.e. the legs of f.i. a bracket.

It is to be appreciated that penetrate refers to both the elongated object penetrating and/or piercing through the first member and the elongated object moving into and/or through the first member. In terms of the specification the "penetretable" and "pierceable" may be used interchangeably.

The first member may include a plurality of cavities on an inner surface thereof, wherein the cavities are adjacent and/or indexed to the plurality of predetermined penetratable sections. In use, the cavities provide for at least one of the following: a recess, a pocket, or the like, within the first member such to retain displaced material or debris of the first member therein, resulting from the penetration of the first member.

The plurality of scored sections may be in the form of at least one of the following: cuts, grooves, visual lines or the like, thereby advantageously providing for pre-marked and or pre-weakened lines on the insulating sleeve. It is to be appreciated that the pre-marked lines provide for signalling where a cut can be made for separating into a stand-alone part on one side of the line and another stand-alone part on the other side of the line. It is to be appreciated that pre-weakened line provides for the members being more easily separating into a stand-alone part on one side of the line and another stand-alone part on the other side of the line, for instance in order to adjust the length of the members.

The insulating sleeve may include a plurality of openings when the members are connected, thereby providing outlets for any one or more of the following: the piping component's branching pipes to extend through, hosting a pressure or temperature gauge, sensors, or the like.

The insulating sleeve may comprise of any one or a combination of the following materials: expanded polypropylene, expanded polystyrene, polyethylene propylene, foam plastics, foam polymers, or the like.

The insulating sleeve may further comprise of a material having at least one of the following characteristics: elastic, insulator, compressible, acoustic insulation, heat-resistant, impermeable, or the like.

The elongated object may include any one or a combination of the following: a component of a bracket, fixture of the like, capable of being attached to a support structure to which the piping component is to be secured.

The support structure may include any of the following: a wall, a roof, a floor or the like.

The manifold may be in the form of any one of the following materials: a polymer, steel, stainless steel, brass or the like, or a combination thereof resulting in a composite material.

According to another aspect of the disclosure is provide a method according to claim 1 or 2, wherein the modular body includes gender connectors to allow for an interlocking arrangement between the members, and wherein the step of arranging the second member onto the exposed surface of the piping component comprises using the gender connectors for interlocking the members.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Figure 1 shows a three-dimensional view of a modular insulating sleeve in accordance with once aspect of the disclosure;
Figure 2 shows a three-dimensional view of a first member of the insulating sleeve;
Figure 3 shows a three-dimensional view of a second member of the insulating sleeve;
Figure 4 shows a three-dimensional view of a third member of the insulating sleeve;
Figure 5 shows a piping component to be insulated by the insulating sleeve shown in Figure 1;
Figure 6 shows a side view of the first member shown in Figure 2;
Figure 7 shows a flow diagram of a method for insulating the piping component, shown in Figure 5;
Figures 8-14 shows a schematic view of the method presented in Figure 7; and
Figure 15 shows an in use view of two insulating sleeves insulating two piping components.

### Detailed description of examples

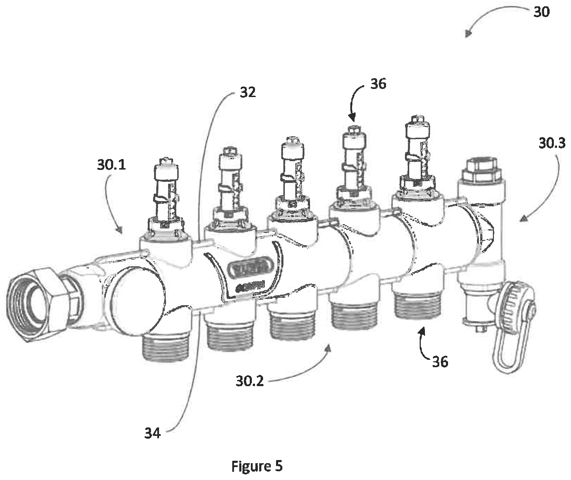

In the Figures reference numeral 10 refers to an insulating sleeve for a piping component, which in this disclosure is a manifold 30 (best shown in Figure 5), preferably of an indoor climate control system (not shown).

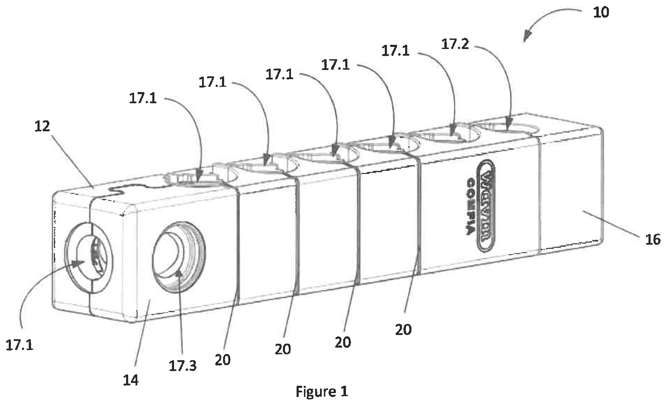

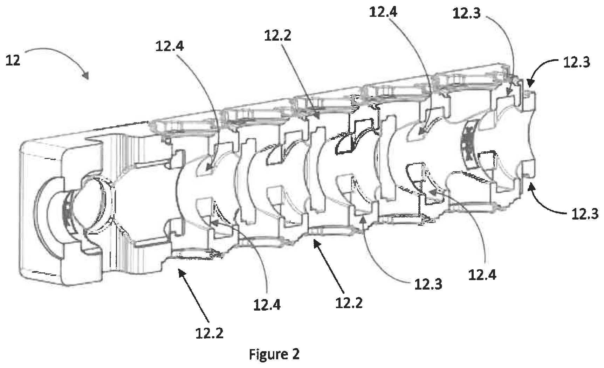

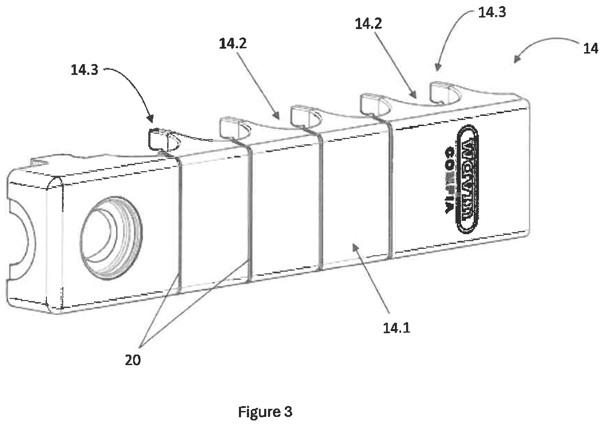

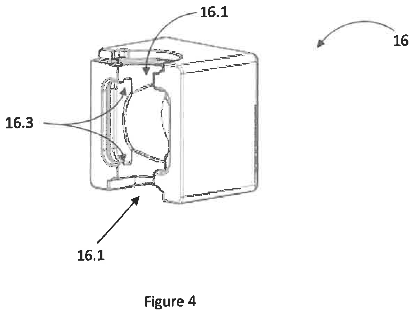

The insulating sleeve 10 includes a modular body having a first member 12 (shown in Figure 2), a second member 14 (shown in Figure 3) and a third member 16 (shown in Figure 4) configured such that when the members 12, 14, 16 are interlocked (as shown in Figure 1), it defines the insulating sleeve 10 for the piping component 30. Furthermore, each member 12, 14, 16 having an inner profile configured to match at least a part of an outer profile of the piping component 30. More specifically, the first member 12 is configured to match a rear profile 30.1 of the piping component 30, the second member 14 is configured to match a front profile 30.2 of the piping component 30 and the third member 16 is configured to match a corner profile 30.3 of the piping component 30.

Both the first 12 and second 14 member are in the form of an elongated structure having a substantially corrugated inner profile, whereas the third member 16 is in the form of a substantially cubical body having a recess for receiving the corner portion (being the corner profile 30.3) of the piping component 30 therein.

In order for the members 12, 14, 16 to be interlocked with each other when fitted onto the piping component 30, the members 12, 14, 16 each include gender connectors 12.3, 14.3, 16.3, respectively, arranged on an inner profile and in an indexed manner to each other. In this disclosure, the gender connectors 12.3, 14.3, 16.3 are in the form cut-outs and protrusions.

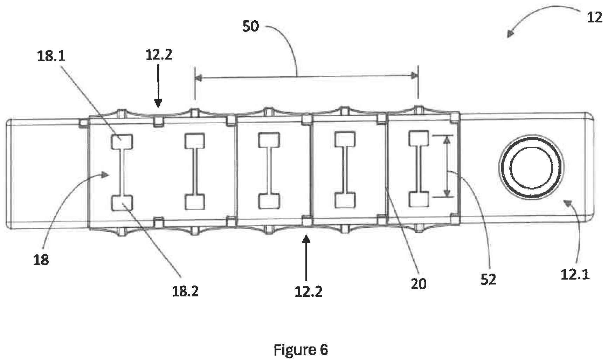

The insulating sleeve 10 further includes a plurality of predetermined penetretable sections 18, as shown in Figure 6, arranged on the first member 12, which in use, facilitates an insulated push-out and/or push-through means when the first member 12 is penetrated by an object. In this disclosure, the plurality of predetermined penetretable sections 18 is in the form of spaced apart cuts. It should be appreciated that there is a difference in push-out and push-through within this disclosure. A push-out embraces at least partly, or complete, loosening of a part of the first member in the predetermined penetratable section. In contrast, a push-through embraces the densification of material of the first member that surrounds a channel that is made by, and followed by a piercing object.

Accordingly, the through opening which is formed by piercing through the elongated object may have features of one or both of a push-out and a push-through. The predetermined penetratable sections may be open-ended or close-ended. When open-ended, the through opening will more likely have the features of a push-through. When close-ended, the formed through-opening will more likely have features of a push-out.

The insulating sleeve 10 also may further include a plurality of scored sections 20 arranged on an exterior surface 12.1, 14.1, respectively, of both the first member 12 and the second member 14. In this disclosure, the scored sections 20 may be in the form of grooves which provide for pre-weakened lines on the first member 12 and second member 14. It is to be appreciated that, the pre-weakened lines reduces the members 12, 14 structural integrity, such to provide for a length adjustment means of the members 12, 14, resulting in the members 12, 14 being able to be split up in separate parts in order to adjust the length of the members 12, 14 in order to match a length/profile of the piping component 30 to be insulated. However, scored sections may also be in the form of merely visual lines which signal where a cut is preferably made in order to end up with a separation of the parts on the opposite sides of the line.

Also, both the first 12 and second 14 members each having a plurality of semicircular cut outs 12.2, 14.2, respectively, such that when the members 12, 14 are connected to each other it thereby defines a plurality of spaced apart openings 17.1 on the top, a bottom and side of the insulating sleeve 10. In addition, the third member 16 also includes two semicircular cut outs 16.1 arranged on an operating end thereof which is to be connected to the first 12 and second 14 members, when in an engaged formation, thereby defining additional openings 17.2 on both a top and bottom side of the insulating sleeve 10. Additionally, the first member 12 and second member 14 include an opening 17.3., for hosting a temperature or pressure gauge (not shown), which may include for instance a sensor of a particular sort (not shown).

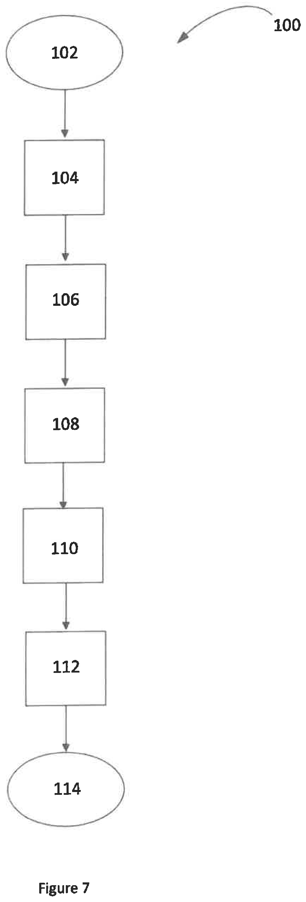

Further to the disclosure there is provided a method 100, shown in Figure 7, for insulating the piping component 30 through use of the insulating sleeve 10. The method 100 commences at 102 and ends at 114 at which is insulation is completed. For the purpose of facilitating an understanding of the advantage of the disclosure of the insulating device, features of the device are described in relation to steps of the method.

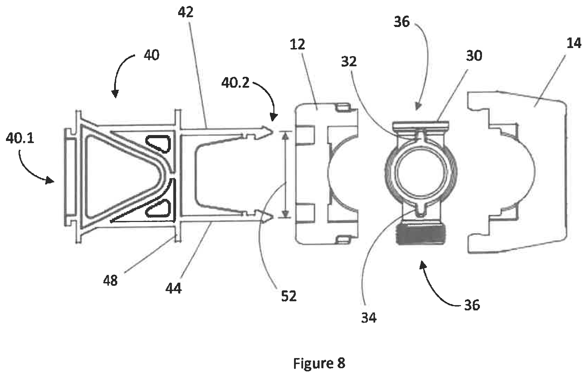

At 102, as shown in Figure 8, the first member 12 and the second member 14 of the insulating sleeve 10 is provided, including the piping component 30. Figure 8 also shows a fixture 40, which in this disclosure is in the form of bracket having a proximal end 40.1 and a distal end 40.2.

It to be appreciated that, although not shown, the proximal end 40.1 of the bracket 40 is securable to a support structure which may be in the form of a wall, a roof or a floor in either a direct and/or indirect manner. Resulting in the bracket 40 extending substantially perpendicular from the support structure.

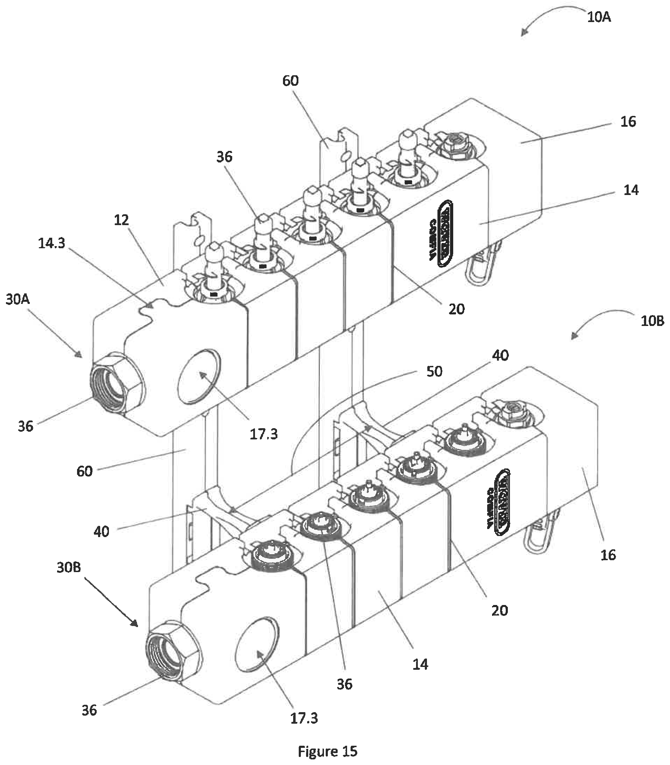

In this disclosure, as shown in Figure 15, two brackets 40 are provided for each piping component 30 (30A and 30B), which brackets 40 are mounted indirectly to the support structure (not shown) via mountings brackets 60 and the brackets 40 are spaced horizontally along the support structure. It is to be appreciated that, the spacing of the brackets 40 is indexed to match a pitch 50 also shown in Figure 6) between the predetermined penetratable 18 on the first member 12.

Furthermore, the distal end 40.2 of the bracket 40 includes two legs 42, 44, configured to match the configuration of the predetermined penetratable sections 18. More specifically, the two legs 42, 44 are spaced apart a vertical distance 52, such allow for the top leg 42 to engage with a top portion 18.1 of the predetermined penetratable section 18 and the bottom leg 44 to engage with a bottom portion 18.2 of the predetermined penetratable section 18.

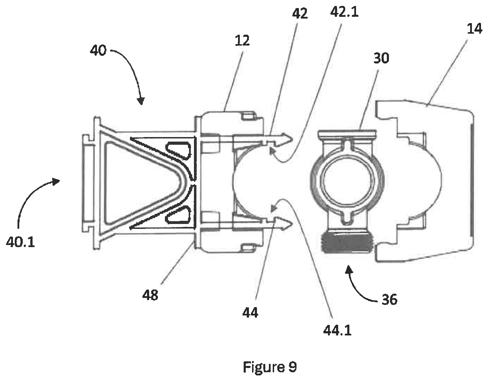

At 104, as shown in Figure 9, the first member 12 is mounted to the bracket 40, in that the first member 12 is transversely penetrated by the legs 42, 44 of the bracket 40 through the respective cut outs 18.1, 18.2, wherein the cut outs 18.1, 18.2 provided for the push-through means. Furthermore, the first member 12 is penetrated by the distal end 40.2, preferably such that the exterior surface 12.1 thereof is arranged flush with an insulating plate 48 of the bracket 40 and the distal end 40.2 extends through the first member 12, thereby allowing for the bracket 40 to be able to engage with the piping component 30. It is to be appreciated that the engagement between the insulating plate 48 and the first member 12 results in the cut outs 18.1 and 18.2 being covered by the insulating plate 48, and in that penetrated perforated sections 18 are insulated.

The first member 12 also includes cavities 12.4 on an inner surface thereof, wherein the cavities 12.4 are adjacent to the cut outs 18. The cavities 12.4 defines recesses within the first member 12, which in use is to retain displaced material of the first member 12 therein, which displaced material is that of the cut outs 18.1, 18.2 penetrated by the legs 42, 44.

Also, the distal ends 40.2 of the two legs 42, 44 are configured such to allow for a click-fit connection between the bracket 40 and the piping component 30. The click-fit connection provides for the piping component 30 being compression fitted between the two legs 42, 44. In this disclosure, the piping component 30 includes lip portions 32, 34 which extend from a top and bottom end, respectively, therefrom and wherein the two legs 42, 44, include a cut out 42.1, 44.1 configured to engaged with the lip portions 32, 34, respectively, thereby defining the click-fit connection.

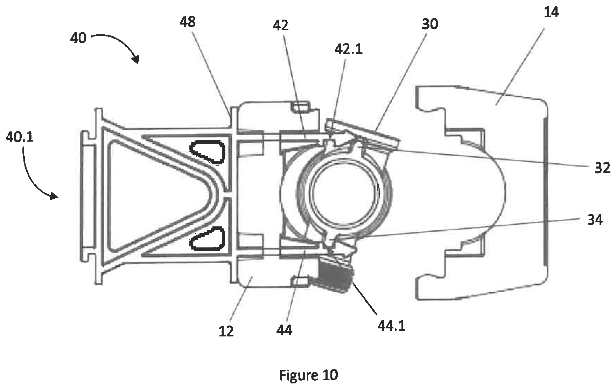

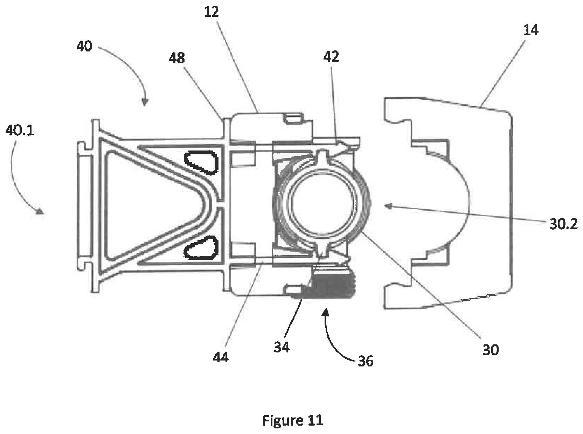

At 106, as shown in Figures 10 and 11, the piping component 30 is fitted onto the first member 12. Figure 10 shows a first step in fitting the piping component 30 onto the first member 12, which includes providing the piping component 30 in a slightly slanted orientation which firstly allows for the lip portion 34 to engaged with the cut out 44.1. Thereafter, a second step is shown in Figure 11, in which the piping component 30 is rotated towards the bracket 40, wherein the lip portion 32 engages with the cut out 42.1, resulting in the piping component 30 being affixed onto the distal end 40.2 of the bracket 40.

It is to be appreciated that, the fitting of the piping component 30 on the first member 12 results in the rear profile 30.1 to be covered by the inner surface of the first member 12, resultantly defining an exposed surface of the piping component 30, being the front profile 30.2 thereof.

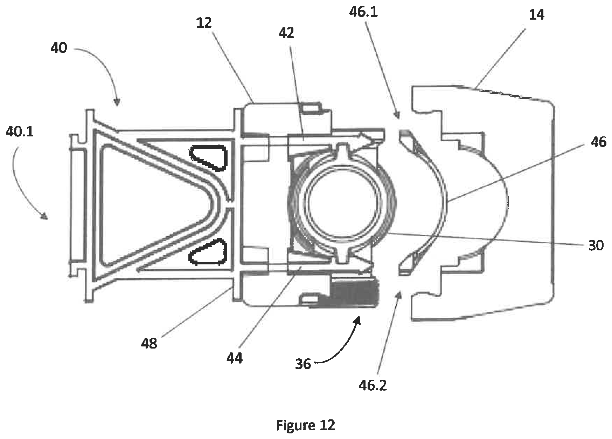

At 108, as shown Figure 12, a fasterner or fastening device in the form of a clip 46 is provided, which clip 46 is arranged between the exposed surface 30.2 of the piping component 30 and inner surface 14.2 of second member 14.

The clip 46 is configured such that a top end 46.1 and a bottom end 46.2 thereof is operable to engage with the distal ends 40.2 of the legs 42, 44, respectively.

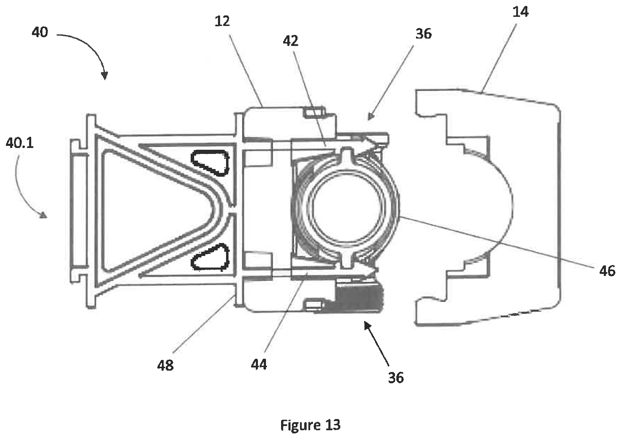

At 110, as shown in Figure 13, the clip 46 is connected to the bracket, thereby securing the piping component 30 to the distal end 40.2 of the bracket 40.

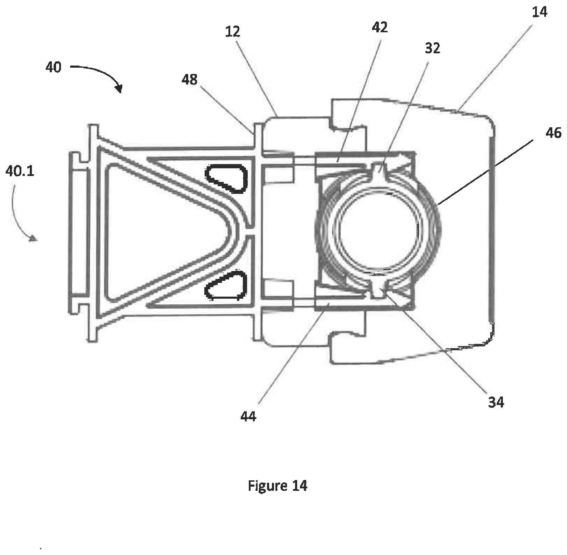

At 112, as shown in Figure 14, the second member 14 is arranged onto the exposed surface 30.2 of the piping component 30, thereby insulating the rear profile 30.1 and the front profile 30.2 of the piping component 30 between the first member 12 and second member 14. Further to this step 112, although not shown, the third member 16 is fitted onto the corner profile 30.3 of the piping component 30. Resulting in the piping component 30 being insulated within the insulating sleeve 10 and (only) allowing for branching pipes 36 of the piping component 30 to be exposed via the openings 17.1, 17.2, 17.3.

Figure 15 shows a typical in use arrangement/installation of two piping components 30A and 30B, which members 30A, 30B are having the same length, and which are being insulated by two insulating sleeves 10A and 10B, which also have the same length. It can easily be envisaged that for a different length for one of the two piping components 30A and 30B, one of the two insulating sleeves will also have a different length. The scored sections 20 as provided on the first member 12 and second member 14 of the top configuration may be used to adjust either through separation or cutting the length of the members 12,14, so as to match the configuration of a shorter piping component 30A.

The disclosure is not limited to what has been shown in the drawings and what has been described above. Many modifications are possible. The first member may include apertures configured for receiving the elongated member (i.e. the leg of a bracket) therethrough, so that after interlocking the first and second member to define at least a part of a sleeve, the elongated member (i.e. the leg of a bracket) extends towards the second member. This provides a stronger construction by which the manifold is held.

The order in which the various components are placed may vary. It is for instance conceivable that the second member is mounted into an exposed surface of the piping component before the piping component is fitted onto the first member.

## Claims

1. A method for insulating a piping component, such as a manifold, of an indoor climate control system, which includes:
providing a modular body of which an inner profile is configured to match at least a part of the piping component's outer profile, the modular body having at least a first and second member;
mounting the first member to a fixture having a proximal end and a distal end, wherein the first member is transversely penetrated by the distal end of the fixture, and wherein the fixture at the proximal end is securable to a support structure;
fitting the piping component onto the first member; and
arranging the second member onto an exposed surface of the piping component.

2. The method according to claim 1, wherein the step of fitting the piping component includes at least one of the following steps:
attaching the piping component to the fixture by means of an interference or compression fit as a result of the piping component engaging with the distal end of the fixture extending through the first member; and, optionally
securing the piping component to the distal end by means of a fastening device.

3. The method according to claim 1 or 2, wherein the modular body includes gender connectors to allow for an interlocking arrangement between the members, and wherein the step of arranging the second member onto the exposed surface of the piping component comprises using the gender connectors for interlocking the members

4. The method according to any one of claims 1 to 3, wherein the modular body includes fasteners to allow for the members to be detachable connected, and wherein the step of arranging the second member onto the exposed surface of the piping component comprises detachably connecting the members using the fasteners

5. The method according to any one of claims 1 to 4, wherein either or both the first member and second member include a plurality of scored sections and/or predetermined penetratable sections, such to provide for at least one of the following:
reducing an amount of push force required for the distal end to penetrate through and/or push-through the first member;
indexing positions through which the distal ends are to penetrate through and/or be pushed-through the first member, during the step of mounting the first member to the fixture; and
reducing the modular body's structural integrity, such to provide for a length adjustment means of the members, wherein the members may be broken or snapped at the scored sections.

6. The method according to any one of claims 1 to 5, wherein the first member includes at least one aperture configured for receiving the distal end of the fixture therethrough, and wherein mounting the first member onto a fixture comprises having the aperture receiving the distal end of the fixture.

7. The method according to any one of claims 1 to 6, wherein the fixture is in the form of a bracket.

8. The method according to any one of claims 5 to 7, wherein the distal end includes at least two legs, configured to match the configuration of the plurality predetermined penetratable sections and/or at least two apertures arranged on the first member.

9. The method according to claim 8, wherein the bracket includes an insulating plate disposed onto the two legs and arranged between the proximal end and distal end of the bracket, wherein the insulating plate is configured such that during the step of mounting the first member onto the fixture it provides for at least of the following:
insulating after penetrating the first member by the distal end of the fixture; and,
restricting the first member from moving in a direction towards the proximal end of the bracket.

10. The method according to any one of claims 1 to 9, wherein the modular body comprises any one or a combination of the following materials: expanded polypropylene expanded polystyrene, polyethylene propylene, foam plastic and foam polymers.

11. The method according to any one of the preceding claims, wherein the modular body comprises a material having at least one of the following characteristics: elastic, insulator, compressible, acoustic insulation, heat-resistant and impermeable.

12. The method according to any one of claims 1 to 11, wherein the support structure includes any of the following: a wall, a roof and a floor.

13. The method according to claim 2 and any one of claims 4 to 12, wherein the fastening device includes a clip operable of being detachably connected to the distal ends of the fixture, wherein the method includes detachably connecting the distal ends of the fixture by operating the clip.

14. The method according to any one of claims 1 to 13, wherein transversely penetrating the first member by the distal end of the fixture comprises piercing by the distal end of the fixture through the first member.

15. An insulating sleeve for a piping component, such as a manifold, of a climate control system, which includes
a modular body having at least two members configured such that when the members are interlocked it defines the insulating sleeve, wherein an inner profile of the insulating sleeve is configured to match at least a part of an outer profile of a piping component;
a plurality of open-ended or closed-ended predetermined penetretable sections arranged on the first member, such to facilitate an insulated punch-out or push-through means when the first member is penetrated by an elongated object; and optionally,
a plurality of scored sections arranged on both members, thereby allowing for the insulating sleeve being adjustable in length to match an outer profile of an piping component.

16. The insulating sleeve according to claim 15, wherein the insulating sleeve includes gender connectors arranged on the member, such to allow for the members to be interlocked.

17. The insulating sleeve according to claim 16, wherein the gender connectors include cut outs and/or protrusions arranged on the members in an indexed manner.

18. The insulating sleeve according to any one of claims 15 to 17, wherein the insulating sleeve is provided with a fastening device or at least one fastener to allow for the members to be detachably connected.

19. The insulating sleeve according to any one of claims 15 to 18, wherein the first member includes apertures configured for receiving the elongated object therethrough and preferably, after interlocking the members so as to define a sleeve, extending towards the second member.

20. The insulating sleeve according to any one of claims 15 to 19, wherein at least one of the plurality of predetermined penetratable sections is in the form of at least one of the following: a groove, a cut, a hole and an aperture.

21. The insulating sleeve according to any one of claims 15 to 20, wherein the first member includes a plurality of cavities on an inner surface thereof, wherein the cavities are adjacent and/or indexed to the plurality of perforated sections.

22. The insulating sleeve according to claim 21, wherein the plurality of cavities defines recesses and/or pockets within the first member, such to retain displaced material or debris of the first member therein, resulting from the penetration of the first member by the elongated object.

23. The insulating sleeve according to any one of claims 15 to 22, wherein the plurality of scored sections comprises of at least one of the following: cuts and grooves, thereby providing for pre-weakened lines on the insulating sleeve, and/or wherein the plurality of scored sections comprises of at least a visual line for signalling where a cut is best made.

24. The insulating sleeve according to claim 23, wherein the pre-weakened lines provides for a length adjustment means for the members, such that the members are easily broken or otherwise separated in order to adjust the length of the members

25. The insulating sleeve according to any one of claims 15 to 24, wherein the insulating sleeve includes a plurality of openings when the members are connected, thereby providing for outlets for any one or more of the following: the piping component's branching pipes to extend through, hosting a temperature and/or pressure gauge or sensor.

26. The insulating sleeve according to any one of claims 13 to 23, wherein the insulating sleeve comprise of a material having at least of the following characteristics: elastic, insulator, compressible, acoustic insulator, heat-resistant and impermeable.

27. The insulating sleeve according to claim 26, wherein the insulating sleeve comprises any one or a combination of the following materials: expanded polypropylene, expanded polystyrene, foam plastics and foam polymers.

28. The insulating sleeve according to any one of claims 15 to 27, wherein the elongated object includes any one or combination of the following: a component of a bracket, and fixture, capable of being attached to a support structure to which the piping component is to be secured.

29. The insulating sleeve according to claim 28, wherein the support structure includes any of the following: a wall, a roof and a floor.

30. The insulating sleeve according to any one of claims 15 to 29, wherein the piping component is in the form of any one of the following materials: a polymer, steel, stainless steel and brass, or a combination thereof resulting in a composite material.

31. An assembly of an insulating sleeve according to any one of claims 15-30 and a fixture and/or a manifold, wherein the fixture has a proximal end and a distal end, the distal end being securable to a support structure and the proximal end for penetrating one of the plurality of open-ended or closed-ended predetermined penetratable sections, the manifold having an outer profile which matches an inner profile of the insulating sleeve.
